# FASCICULE DE BREVET EUROPEEN

(11) **EP 0 634 981 B1**
(45) Date de publication et mention de la délivrance du brevet: **29.07.1998**
(21) Numéro de dépôt: 93907911.7
(22) Date de dépôt: 30.03.1993
(51) Int. Cl.: B60P 7/04, B60J 7/10

(54) **DISPOSITIF ESCAMOTABLE DE BACHAGE ET DE DEBACHAGE D'UN ESPACE BI OU TRIDIMENSIONNEL**
EINZIEHBARE EINRICHTUNG ZUM BEDECKEN UND ÖFFNEN EINES ZWEI-ODER DREIDIMENSIONALEN PLATZES
RETRACTABLE DEVICE FOR RAISING AND LOWERING A COVER OVER A TWO OR THREE DIMENSIONAL SPACE

(30) Priorité: 01.04.1992 FR 9204198
(43) Date de publication de la demande: 25.01.1995
(73) Titulaire: Mahaut, Michel, F-69340 Francheville (FR)
(72) Inventeur: Mahaut, Michel, F-69340 Francheville (FR)
(74) Mandataire: Thibault, Jean-Marc
(86) Numéro de dépôt international: FR9300319
(87) Numéro de publication internationale: WO9319951

(56) Documents cités:
- FR-A- 2 259 721
- US-A- 3 586 365
- REVUE DE L'ALUMINIUM vol. 501, Décembre 1980, PARIS pages 531 - 533 'Réromatic un "coup de Bâche" automatique'

## Description

### DOMAINE TECHNIQUE

La présente invention concerne le domaine technique du bâchage et du débâchage d'un espace au sens général, de caractère bi ou tridimensionnel, tel qu'une surface ou un volume donné, particulièrement un dispositif selon les caractéristiques du préambule de la revendication 1.

L'invention trouve une application dans tous les domaines ou un espace bi ou tridimensionnel doit être recouvert par un élément d'occultation ou de protection, comme par exemple une bâche au sens général. L'invention est adaptée, en particulier, pour permettre de couvrir la surface d'une piscine ou ta surface ou le volume de chargement d'un véhicule, d'un wagon ou d'un conteneur.

### TECHNIQUE ANTERIEURE

Dans l'application préférée du bâchage d'un véhicule, l'état de la technique a proposé divers types de dispositifs pour couvrir l'espace ou le volume de chargement par l'intermédiaire d'une bâche de protection. D'une manière générale, ces dispositifs comportent une bâche montée sur une série de traverses ou d'arceaux qui sont supportés par des moyens pour les déplacer selon un sens de bâchage et un sens contraire de débâchage. Les moyens de déplacement sont constitués, par exemple, par des chariots coulissants dans des rails, comme illustré par le document "**REVUE DE L'ALUMINIUM**", vol. 501, Décembre 1980, PARIS ou, par exemple, par des chaînes montées en sans fin, tel que cela ressort de la demande de brevet **FR-A-2 259 721**, représentant l'état de la technique le plus pertinent. Les moyens de déplacement sont adaptés sur les côtés longitudinaux de l'espace à recouvrir.

Tous les dispositifs connus actuellement présentent l'inconvénient de laisser subsister, en position débâchée, sur les côtés de l'espace à recouvrir, des organes nécessaires au déplacement de la bâche. De tels organes sont soumis, en position de débâchage, à diverses détériorations en fonction de l'application visée, ce qui entraîne des anomalies de fonctionnement, voire une destruction complète du dispositif. Cette situation arrive fréquemment dans le cas où le dispositif de bâchage équipe un véhicule à benne destiné à recevoir des matériaux chargés par des appareils du type pelle mécanique.

Il apparaît, également, que les dispositifs connus de l'art antérieur ne permettent pas, en raison de leur principe, d'équiper des véhicules à benne dont le déversement s'effectue latéralement ou par la partie arrière de la benne.

### EXPOSE DE L'INVENTION

La présente invention vise donc à remédier aux inconvénients énoncés ci-dessus en proposant un dispositif selon les caractéristiques du préambule de la revendication indépendante, pour recouvrir et découvrir un espace bi ou tridimensionnel, apte à pouvoir être escamoté en position de débàchage, de manière à ne subir aucune détérioration dans cette position de non utilisation.

Pour atteindre cet objectif, le dispositif selon l'invention comporte des moyens de déplacement constitués par au moins un équipement comportant :
- une chaîne rigide au moins en poussée, commandée en translation et comportant une extrémité reliée à la poutre de tête,
- une série de moyens assurant une liaison temporaire relativement entre la chaîne et la bâche et destinés à être répartis le long de la bâche en position de bâchage,
- et un système agissant sur les moyens de liaison temporaire et adapté pour désolidariser, au niveau du magasin et au moins selon le sens de débàchage, la bâche par rapport à la chaîne, permettant un rangement successif de la bâche dans le magasin indépendemment du rangement de la chaîne et un escamotage complet de l'équipement par rapport à l'espace à recouvrir.

Le dispositif selon l'invention permet donc d'assurer le bâchage et le débâchage d'un espace bi ou tridimensionnel et présente l'avantage d'être totalement escamoté en position de débàchage, interdisant toute détérioration susceptible d'intervenir dans cette position débâchée.

### BREVE DESCRIPTION DES DESSINS

Diverses autres caractéristiques ressortent de la description faite ci-dessous en référence aux dessins annexés qui montrent, à titre d'exemples non limitatifs, des formes de réalisation de l'objet de l'invention.

La **Fig. 1** est une vue en perspective schématique d'un dispositif de bâchage et de débàchage conforme à l'invention équipant, à titre d'exemple, une benne.

La **Fig. 2** est une coupe en élévation prise sensiblement selon les lignes II-II de la **Fig.1** et montrant le dispositif selon l'invention.

La **Fig. 3** est une vue en coupe transversale prise sensiblement selon les lignes III-III de la **Fig. 2.**

La **Fig. 4** est une vue en coupe prise sensiblement selon la ligne IV-IV de la **Fig. 2** et montrant un détail caractéristique de l'invention.

La **Fig. 5** est une coupe transversale prise selon les lignes V-V de la **Fig. 2** et montrant un détail caractéristique.

La **Fig. 6** est une vue en coupe analogue à la **Fig. 2** montrant le dispositif selon l'invention en position de débâchage, adapté sur une benne à déversement latéral.

La **Fig. 7** est une vue en perspective illustrant une autre variante de réalisation des moyens de liaison temporaire selon l'invention.

La **Fig. 8** est une vue en coupe-élévation montrant un exemple de réalisation d'un dispositif de bâchage et débâchage conforme à l'invention, destiné à équiper notamment une piscine.

La **Fig. 9** est une coupe transversale prise sensiblement selon les lignes IX-IX de la **Fig. 8** et illustrant un détail caractéristique de l'invention.

### MEILLEURE MANIERE DE REALISER L'INVENTION

Dans l'exemple illustré sur les dessins, le dispositif selon l'invention est conçu pour recouvrir et découvrir, par l'intermédiaire d'une bâche **1**, un espace bidimensionnel **2** constitué par la surface supérieure d'un volume délimité par une benne **3**. La bâche **1** est montée par tous moyens appropriés connus en soi sur une poutre avant ou de tête **4** et, dans l'exemple illustré, sur une série de traverses ou d'arceaux **5** en nombre adapté à la nature de la bâche et à la taille de la surface **2** à couvrir. Les traverses **5** et la poutre **4** sont reliées entre elles par l'intermédiaire d'un câble **6** permettant de déterminer, en position de bâchage, l'écartement entre les traverses et entre la poutre de tête et la traverse voisine.

Le dispositif selon l'invention comporte des moyens pour assurer le déplacement de la bâche dans un sens de bâchage **f**_{**1**} et un sens contraire de débâchage **f**_{**2**}**,** entre un magasin **7** de réception de la bâche en position débâchée et une position de bâchage total de la surface **2.** Les moyens de déplacement sont constitués par au moins un, et dans l'exemple illustré, par deux équipements **A, B** adaptés chacun selon une ridelle longitudinale **9** de la benne **3.**

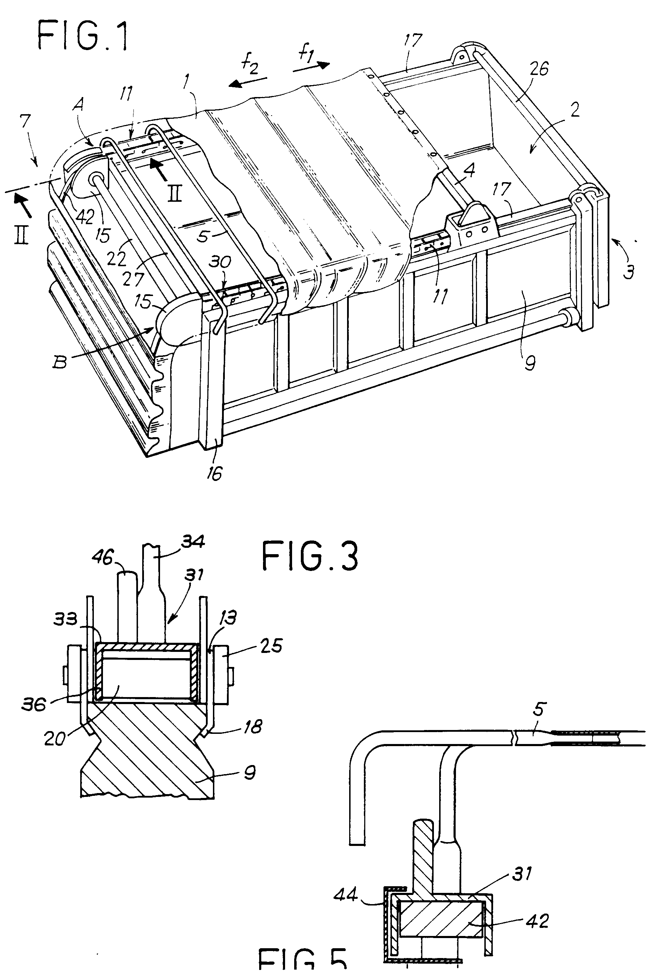

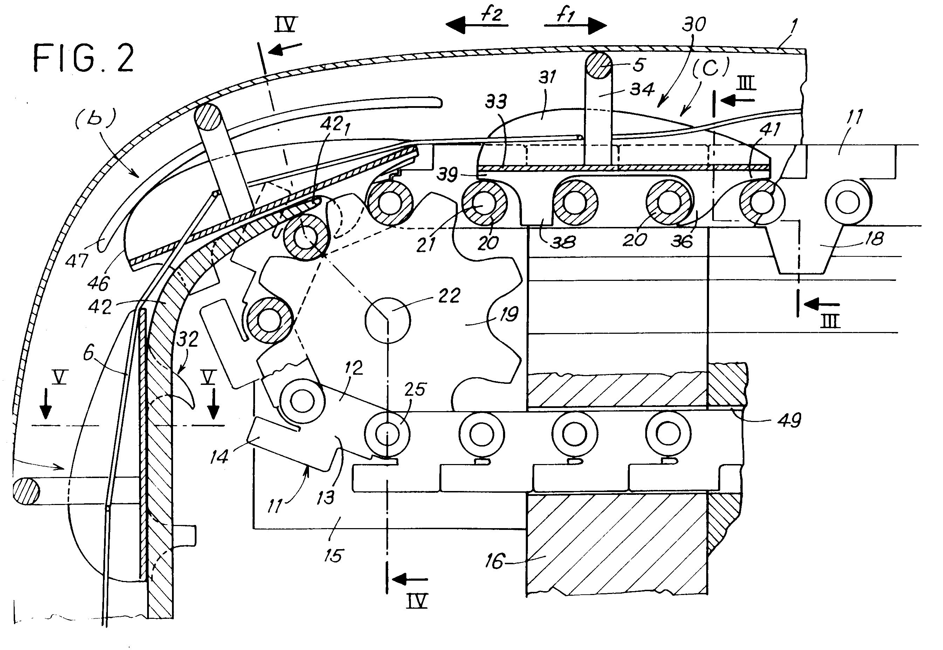

Tel que cela apparaît plus précisément au**x Fig. 1** et **2,** chaque équipement **A, B** comporte une chaîne **11** présentant la propriété de devenir rigide au moins en poussée. Dans l'exemple illustré, chaque chaîne **11** est constituée d'une série de maillons **12** comportant chacun sur leurs deux joues **13,** des épaulements **14** destinés à venir s'appuyer les uns contre les autres au fur et à mesure de leur sortie d'un carter d'entraînement **15** placé à l'entrée du magasin **7.** Les épaulements **14** sont adaptés pour autoriser un pivotement relatif des maillons **12** dans un sens donné et pour interdire un tel pivotement dans le sens contraire.

De préférence, chaque carter d'entraînement **15** est monté sur un poteau avant **16** de la benne, à sa partie supérieure, de manière qu'en sortie du carter, la chaîne **11** puisse se déplacer sur une voie de guidage **17** rapportée ou ménagée sur la partie supérieure des ridelles **9**. Certains des maillons **12** de la chaîne **11** sont équipés de pièces rapportées de guidage ou, comme dans l'exemple illustré, de bords tombés **18** prolongeant les joues **13.** Les bords tombés **18** coopèrent avec le profit de la voie **17,** en vue d'assurer un guidage convenable de la chaîne le long de la voie **17** (**Fig. 3**).

Chaque carter **15** comporte intérieurement un pignon d'engrénement **19** dont les dents coopèrent avec des rouleaux **20** portés chacun par un axe **21** d'articulation des maillons entre eux. Dans l'exempte illustré, les pignons **19** sont montés sur un arbre commun **22** s'étendant transversalement entre les ridelles **9,** en dehors de l'espace **2** à couvrir. L'arbre **21** est piloté en rotation dans les deux sens, par l'intermédiaire d'une commande manuelle ou automatique, non représentée.

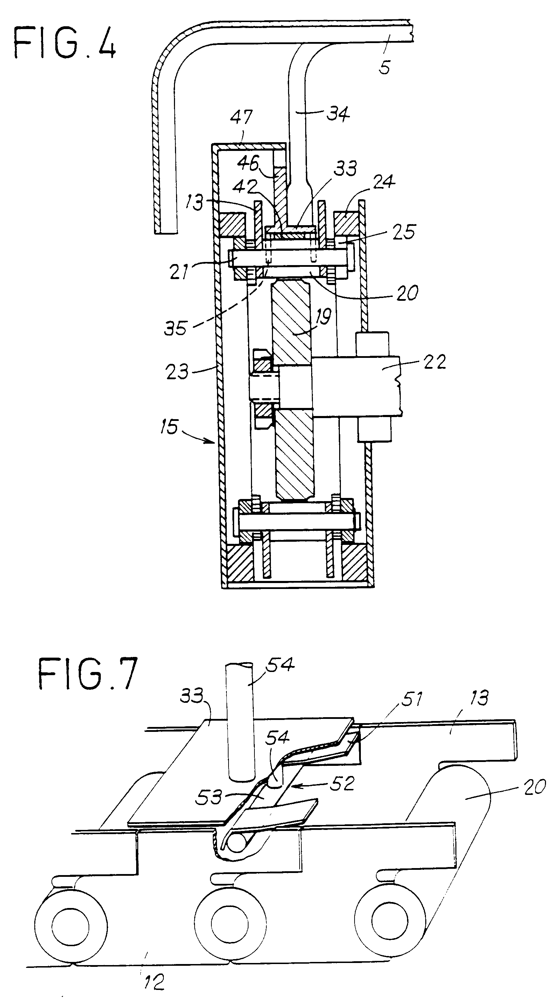

Comme cela ressort plus précisément de la **Fig. 4,** chaque carter **15** est pourvu de deux flasques **23** s'étendant de part et d'autre du pignon **19** selon des plans paralléles à celui contenant le pignon. Les flasques **23** sont pourvus de butées de réaction **24** sur lesquelles roulent, lors du développement de la chaîne autour du pignon **19**, des galets d'entraînement **25** portés par la chaîne. Dans l'exemple illustré aux **Fig. 2** et **4,** les butées de réaction **24** sont disposées sur une plage angulaire de l'ordre de 180° pour permettre un renvoi de la chaîne à 180°.

Les maillons **12** sont maintenus prisonniers, lors de leur engrènement autour du pignon **19,** à l'intérieur du carter entre les dents du pignon **19** et les butées **24** qui absorbent la réaction de poussée. Au cours du déplacement de la chaîne **11** sur la voie de guidage **19,** les maillons **12** sont en appui sur la voie **19,** tandis que leurs épaulements **14** sont en contact les uns contre les autres. Une telle chaîne conserve une articulation nécessaire à son entraînement et à ses changements d'orientation, tout en présentant un caractère rigide au moins en poussée, mais également en traction dans l'exemple illustré.

Il est à noter que la réaction de poussée peut être reprise par une butée centrale **24** coopérant directement avec les rouleaux **20** des maillons, lors de leur engrènement autour du pignon **19.** Selon cette variante, les galets d'entraînement **25** peuvent être supprimés.

Bien entendu, il peut être prévu d'utiliser une chaîne dont la fonction de rigidité en poussée est réalisée par des moyens différents de ceux décrits ci-dessus. A titre d'exemple, il peut être envisagé de mettre en oeuvre une chaîne dont certains des maillons, par exemple un sur deux, sont pourvus de moyens d'accrochage sur la voie, tels que des bords tombés assurant un guidage de la chaîne tout en interdisant, au cours de leur déplacement sur la voie, une cassure ou un pivotement des maillons entre eux. Dans le même sens, il peut être envisagé de mettre en oeuvre une chaîne conçue pour être rigide selon plusieurs plans et réalisée, par exemple, à partir de divers brins de chaînes qui assemblés entre eux permettent d'obtenir une chaîne rigide en poussée.

Chaque chaîne **11** se présente sous la forme d'au moins un brin dont l'une des extrémités est reliée rigidement à la poutre de tête **4,** comme illustré à la **Fig. 1.** La poutre de tête **4** est donc apte à se déplacer entre la ridelle arrière **26** de la benne et l'entrée du magasin **7** qui se trouve placé du côté extérieur de la ridelle avant **27** par rapport à l'espace **2.**

Chaque équipement **A, B** selon l'invention comporte, également, une série de moyens **30** assurant une liaison temporaire ou démontable entre la chaîne **11** et les traverses **5** et destinés à être répartis le long de la bâche en position de bâchage. Les moyens **30** assurent ainsi un montage ou un assemblage, de préférence, ponctuel de la bâche sur la chaîne. Dans la variante de réalisation illustrée aux **Fig. 1** à **6,** les moyens **30** sont conçus pour assurer, au moins en dehors du magasin **7,** une liaison relative des traverses **5** par rapport à la chaîne **11,** selon une direction au moins normale à celle de déplacement de la chaîne, et une liaison temporaire entre la chaîne et la bâche selon au moins le sens de débàchage **f**_{**2**}**.** Dans l'exemple illustré, les moyens de liaison **30** sont portés par des chariots ou des supports **31** équipant chaque traverse **5** et sont constitués par des moyens d'accrochage **32** destinés à coopérer avec les maillons **12** de la chaîne.

A titre d'exemple, chaque chariot **31** comporte une semelle d'appui **33** de largeur inférieure à la mesure transversale séparant les deux joues **13** opposées d'un maillon, afin de permettre son engagement entre ces dernières. Chaque semelle **33** est fixée de manière rigide à une traverse **5** par l'intermédiaire d'une tige de liaison **34,** de sorte que la semelle s'étende dans un plan sensiblement parallèle à celui occupé par la traverse.

Chaque semelle **33** est pourvue de deux plaques parallèles **35** dans lesquelles sont ménagés les moyens d'accrochage **32.** Les plaques **35** s'étendent sensiblement perpendiculairement à la semelle **33,** à l'opposé de la tige **34** et sont séparées l'une de l'autre d'une mesure assurant le passage entre elles des dents du pignon **19.** Chaque plaque **35** est aménagée pour présenter un crochet **36** ouvert en direction de la partie arrière du chariot considéré par rapport au sens de bâchage **f**_{**1**}**.** Le crochet **36** présente une forme en demi-lune, en vue de s'engager partiellement autour d'un rouleau **20** de la chaîne. Chaque plaque **35** est conformée pour présenter, à la partie arrière du chariot, un doigt d'engagement **38** adapté pour s'insérer entre deux rouleaux **20** consécutifs et prolongé par une butée **39** destinée à venir reposer sur le dernier desdits deux rouleaux **20,** considérés dans le sens **f**_{**1**}. Chaque plaque **35** est pourvue, à la partie avant du chariot, d'une contre-butée **41** prolongeant le crochet **36** pour venir en position d'accrochage, en appui sur leur rouleau **20** consécutif à celui coopérant avec le crochet.

Les butées **39** et contre-butées **41** permettent, en combinaison avec le crochet **36,** d'interdire en position d'accrochage, le basculement du chariot dans un plan perpendiculaire à la semelle, quelles que soient les sollicitations exercées sur la bâche. Le crochet **36** assure ainsi une liaison des traverses par rapport à la chaîne selon une direction au moins normale à celle de déplacement de la chaîne. Tel que cela apparaît dans la suite de la description, le doigt d'engagement **38** constitue un moyen de liaison temporaire entre la chaîne et les traverses, selon au moins le sens de débâchage (**f**_{**2**}) permettant à la chaîne d'entrainer les traverses jusqu'au magasin **7.**

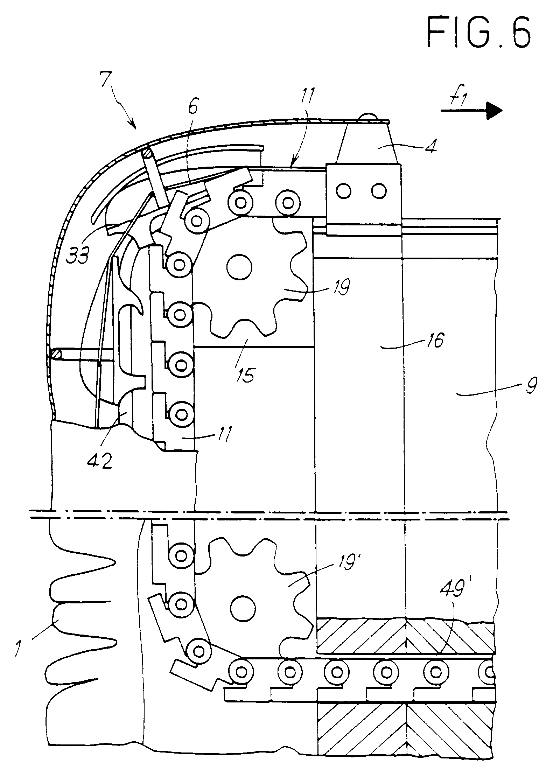

Chaque équipement **A, B,** selon l'invention, comporte également un système adapté pour désolidariser, au niveau du magasin **7** et au moins selon le sens de débâchage, les traverses par rapport à la chaîne. Dans l'exemple illustré à la **Fig. 2,** chaque système est placé à l'entrée du magasin **7** et agit sur les moyens **30** pour assurer la séparation avec la chaîne, des traverses **5** qui se présentent successivement à l'entrée du magasin, lors du déplacement de la chaîne dans le sens de débâchage **f**_{**2**}**.** Tel que cela ressort plus précisément des **Fig. 2** et **4,** chaque système de désolidarisation est constitué par un rail **42** centré sur l'axe de déplacement de la chaîne en présentant une largeur inférieure à la mesure séparant les deux plaques **35** du chariot **31.** Le rail **42** s'étend verticalement à l'intérieur du magasin et présente un nez d'engagement **42**_{**1**}**,** s'étendant selon une courbure orientée en direction du sens **f**_{**1**}**.** Le nez d'engagement **42**_{**1**} présente une extrémité qui vient s'établir à proximité des dents du pignon **19,** au niveau sensiblement du plan médian de déplacement de la chaîne, de manière à être situé au-dessus du parcours d'évolution des rouleaux **20** des maillons, lorsque ces derniers présentent une disposition développée correspondant à celle d'engrènement sur le pignon. Le nez **42**_{**1**} du rail est donc apte à s'engager entre la semelle **33** du chariot et les rouleaux **20** des maillons. Le rail **42** permet de séparer les traverses **5** de la chaîne **11,** tout en assurant de ranger successivement à l'intérieur du magasin **7,** les traverses **5** qui se présentent à l'entrée du magasin. Les chariots **31** glissent par gravité sur le rail, en vue d'obtenir un rangement superposé des traverses **5** qui supportent la bâche dans une position repliée. Tel que cela apparaît à la **Fig. 5,** les chariots **31** sont maintenus en position stable sur le rail **42** par l'intermédiaire d'un guide **44.**

Le fonctionnement du dispositif de bâchage et de débâchage selon l'invention découle directement de la description qui précède.

Dans la position de débâchage de la surface **2,** illustrée à l**a Fig. 6,** la bâch**e 1** est stockée en position repliée à l'intérieur du magasin **7,** tandis que la poutre de tête **4** occupe une position sensiblement à l'aplomb de la ridelle avant **27** et des poteaux avant **16.** Lorsque les pignons d'engrènement **19** sont commandés en rotation, dans le sens de bâchage **f**_{**1**}**,** les chaînes **11** sortent des carters **15** ayant pour effet de déplacer la poutre de tête **4** dans le sens **f**_{**1**}**.** Le mouvement de la poutre **4** entraîne le déplacement concomitant de la traverse **5** voisine, en raison de la liaison établie entre cette dernière et la poutre par l'intermédiaire du câble **6**. La traverse supérieure **5,** stockée dans le magasin **7,** glisse par les semelles **33** de ses chariots **31** sur les rails **42.** Il est à considérer que le rail **42** assure, également dans cet exemple, une fonction d'amenée et de guidage des chariots jusqu'à l'entrée du magasin **7.** Bien entendu, il peut être envisagé que la fonction de guidage des chariots soit assurée par un système différent du rail **42.**

Les semelles **33** et les plaques **35** des chariots sont engagées progressivement entre les joues des maillons au cours du pivotement du chariot **31,** d'une position verticale (**a**) à une position intermédiaire (**b**) (**Fig. 2**). Un tel pivotement du chariot **31** permet d'obtenir l'engagement des crochets **36** entre deux rouleaux **20** de la chaîne qui occupe dans cette région une position développée. La poursuite du déplacement de la chaîne **11,** dans le sens de la flèche **f**_{**1**}**,** permet au crochet **36** de venir coopérer avec un rouleau **20,** tandis que le doigt **38** est engagé entre deux rouleaux **20** consécutifs. Les butées **39** et contre-butées **41** viennent en appui sur les rouleaux **20,** de sorte que le chariot **31** se trouve dans une position (**c**) d'assemblage ou de solidarisation efficace avec la chaîne. Les traverses **5** se trouvent ainsi montées sur la chaîne par l'intermédiaire des chariots qui sont équipés des moyens **36, 39, 41** permettant d'assurer leur liaison avec la chaîne selon un plan sensiblement perpendiculaire à celui de déplacement des chaînes.

Selon une caractéristique avantageuse, chaque chariot **31** est équipé d'un chemin de guidage **46** destiné à coopérer, au cours du pivotement des chariots les faisant passer d'une position verticale à une position horizontale, avec une glissière de guidage **47.** Chaque glissière **47** s'étend sensiblement selon un quart de circonférence, à distance de l'enveloppe décrite par les maillons **12** au cours de leur engrènement et, en s'ouvrant sensiblement selon une direction verticale parallèle au rail **42** et selon une direction horizontale parallèle à la voie **17** de glissement de la chaîne. A titre d'exemple, chaque glissière **47** est formée par un retour tombé présenté par un flasque **23** du carter **15.** La largeur des glissières **47,** prise dans le plan transversal à celui de déplacement de la chaîne (**Fig. 4**), est limité pour laisser subsister au niveau du carter **15,** un passage pour les tiges de liaison **34.** Le chemin de guidage **46** s'étend en saillie à partir de la semelle **33,** en étant décalé transversalement par rapport à la tige **34.** Il est à noter que le chemin de guidage **46** possède un profil courbe adapté pour favoriser le pivotement des chariots et leur assemblage avec les maillons **12** de la chaîne.

Les traverses **5** se trouvent successivement solidarisées a la chaîne **11,** au fur et à mesure au déplacement de celle-ci dans le sens de bâchage **f**_{**1**}**.** Bien entendu, la chaîne **11** possède un pas qui détermine la mesure séparant les traverses **5** en position de bâchage, en vue d'assurer la coopération des moyens d'accrochage **32** des chariots avec les maillons de la chaîne, comme expliqué ci-dessus. L'effort de poussée exercé par les chaînes **11** est suffisant pour écréter, par exemple, les dômes de matériaux se formant lors du chargement de la benne.

En position de bâchage complet de la surface **2,** ta poutre avant **4** stationne à proximité de la ridelle arrière **26** de la benne, tandis que la dernière traverse **5** peut être bloquée en position par l'intermédiaire d'une butée non représentée pour permettre une tension convenable de la bâche **1**. Dans une telle position, la bâche est accrochée fixement à la chaîne par les moyens de liaison temporaire **30** en divers points dont le nombre est adapté à l'application, de manière à constituer un équipement de bâchage rigide, offrant l'avantage d'être insensible aux coups de vent et de maintenir la bâche en position tendue, même lorsqu'elle subit un effort en son milieu.

Lors d'une opération de débâchage, les pignons d'engrènement **19** sont commandés en rotation pour assurer le déplacement de la chaîne selon un sens **f**_{**2**}**,** de sorte que les chariots **31** sont déplacés dans le même sens par l'intermédiaire des doigts **38** poussés par les rouleaux **20** des maillons. La traverse **5,** placée à proximité de l'entrée du magasin **7,** pénètre en premier à l'intérieur de celui-ci. Au début du développement de la chaîne sur le pignon, la partie arrière de la semelle **33** du chariot tend à s'écarter du rouleau **20** sur lequel elle repose. La partie arrière de la semelle **33** rencontre alors l'extrémité du rail **42** placée sur sa trajectoire. Au fur et à mesure de la rentrée du chariot à l'intérieur du magasin **7,** le rail **42** pénètre entre la semelle **33** et les rouleaux **20** de la chaîne. Le pivotement du chariot **31** guidé par la glissière **47** permet d'obtenir le décrochage du chariot par rapport à la chaîne. Les chariots glissent ainsi par gravité sur le rail **42,** de manière à obtenir le rangement des traverses à l'intérieur du magasin. En position de débâchage, le magasin **7** contient toutes les traverses **5** placées de manière superposée les unes aux autres, tandis que la poutre de tête **4** est placée avantageusement à l'aplomb des poteaux avant de la benne. Dans cette position, tous les organes constitutifs du dispositif selon l'invention sont escamotés, de sorte que des opérations de chargement de benne peuvent être exécutées sans, toutefois, entraîner des détériorations au dispositif selon l'invention.

En position de débâchage, il est à noter que l'extrémité libre de la chaîne, opposée de celle assemblée à la poutre **4**, est également escamotée et rangée d'une manière indépendante par rapport à la bâche. A titre d'exemple, illustré à la **Fig. 2,** la chaîne **11** peut être renvoyée à 180° par les pignons **19** pour s'engager dans un logement **49** ménagé à la partie supérieure de la ridelle **9.**

Selon une caractéristique avantageuse de l'invention illustrée à la **Fig. 6,** il peut être prévu de renvoyer à 90° la chaîne, à la sortie des pignons **19,** de manière à la conduire vers un pignon **19'** de renvoi à l'intérieur d'un logement **49'** ménagé sous la partie fixe inférieure de la ridelle **9** qui peut basculer librement. Le dispositif selon l'invention peut ainsi équiper une benne à déversement latéral.

Le dispositif selon l'invention présente l'avantage de pouvoir escamoter totalement les moyens de déplacement de la bâche en position de débâchage. De plus, l'extrémité de la chaîne, opposée à celle reliée à la poutre **4,** peut être placée dans une configuration choisie qui est fonction de l'application visée.

Dans l'exemple illustré, les chaînes **11** se déplacent sur les bords longitudinaux des ridelles **9.** De préférence, chaque traverse **5,** ainsi que la poutre **4,** sont composées de deux tronçons montés de manière télescopique, comme illustré à la **Fig. 5,** de manière à absorber la déformation des traverses et de la poutre, en cas de non parallélisme entre les voies de déplacement **17** des chaînes.

Selon la description qui précède, le dispositif selon l'invention comporte deux équipements **A** et **B** montés sur les côtés longitudinaux de la benne. Bien entendu, il peut être prévu de mettre en oeuvre un unique équipement comportant une chaîne centrale de poussée. De même, Le dispositif selon l'invention est apte à recouvrir un espace **2** bi ou tridimensionnel par l'intermédiaire d'une bâche ou de tous moyens d'occultation ou de protection connus, tels que des plaques ou des panneaux. A cet égara, il peut être envisagé, pour certaines applications et en fonction de la nature de la bâche utilisée, de modifier le montage de la bâche en supprimant les traverses **5.** Les supports ou chariots **31** sont alors directement aménagés sur la bâche ou montés solidaires de la bâche par tous moyens appropriés.

Dans certaines applications, par exemple relatives au recouvrement par une bâche du dessus et des côtés latéraux d'un véhicule, il peut être prévu de remplacer les moyens **36, 39, 41** de liaison des traverses par rapport à la chaîne selon une direction normale à celle de déplacement de la chaîne, par des liens équipant les bordures longitudinales de la bâche et destinés à être fixés sur les côtés du véhicule. Les traverses sont montées sur la chaîne en étant liées ou immobilisées relativement à la chaîne par l'intermédiaire de la tension de bâche réalisée par les liens.

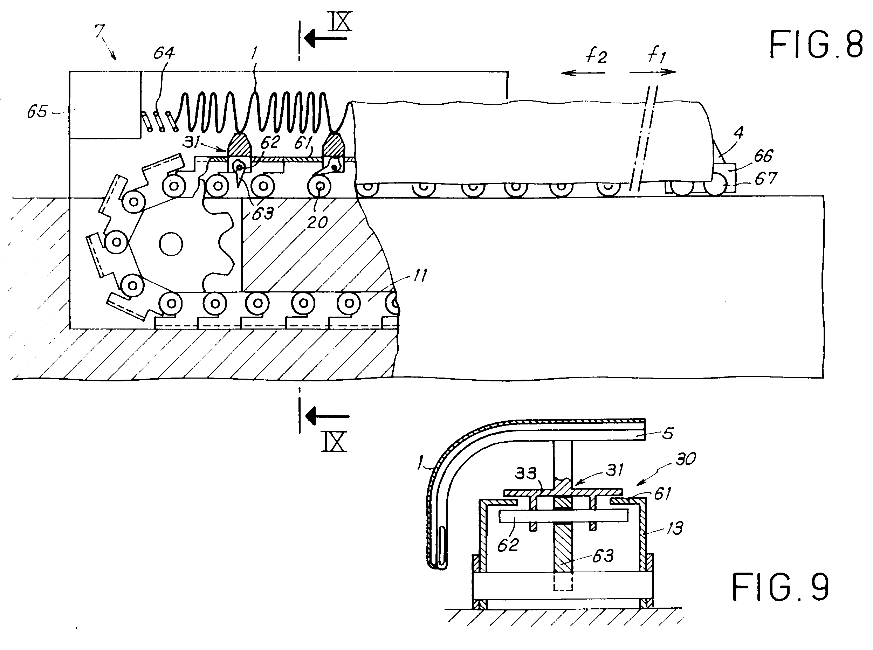

La **Fig. 7** illustre une autre variante de réalisation des moyens de liaison temporaire **30,** constitués par des moyens d'accrochage **51** ménagés sur certains des maillons **12** et destinés à venir coopérer avec des moyens complémentaires **52** qui sont portés par chaque chariot **31** équipant les traverses **5.** Les moyens d'accrochage **51** sont ménagés sur des maillons distants les uns des autres, d'un pas correspondant à celui séparant les traverses **5** en position de bâchage. Selon cet exemple, les moyens **51** sont formés par deux rampes s'étendant transversalement à partir des joues **13** des maillons. Les moyens complémentaires **52** sont formés par une tige **53** s'étendant parallélement aux rouleaux **20** des maillons et portée grâce à un axe de liaison **54,** par la semelle **33** du chariot. L'axe de liaison **54** est apte à s'engager entre les deux rampes **51** pour permettre à la tige **53** d'être coincée par les rampes **51.** La semelle **33** du chariot est équipée de la tige de liaison **54** avec les traverses et, du chemin de guidage **46** non représenté. Les traverses **5** se trouvent ainsi liées à la chaîne par coincement, selon une direction normale à celle de déplacement de la chaîne et d'une manière temporaire selon le sens se débâchage **f**_{**2**}**.** Les opérations d'accrochage et de décrochage d'un tel chariot sur la chaîne sont identiques à celle décrite sans le fonctionnement déjà cité.

Les **Fig. 8** et **9** illustrent une autre variante de réalisation de l'objet de l'invention, adaptée pour assurer un stockage de la bâche dans un plan sensiblement parallèle à celui de déplacement **f**_{**1**}**, f**_{**2**} de la chaîne. Cette variante du dispositif trouve une application particulièrement avantageuse pour le bâchage d'une piscine.

Selon cette variante, les moyens de liaison temporaire **30** sont conçus de manière que les traverses **5** ne se trouvent pas complètement désolidarisées de la chaîne **11,** avec laquelle elles restent montées ou assemblées. Les moyens de liaison temporaire **30** comportent des moyens assurant une liaison avec la chaîne **5,** selon au moins la direction perpendiculaire à celle de déplacement de la chaîne, et constitués par des parties complémentaires ménagées à la fois sur la chaîne **11** et sur les chariots ou supports **31** des traverses **5.** Dans l'exemple illustré, les maillons de la chaîne **11** sont pourvus de bords tombés **61** s'étendant de manière symétrique et normale à partir des joues **13** des maillons, tandis que les chariots ou supports **31** sont pourvus chacun d'une tige de butée **62** engagée entre les joues des maillons pour coopérer avec les bords tombés **61** et limiter le déplacement relatif des traverses par rapport à la chaîne, selon un plan perpendiculaire à la direction de déplacement de la chaîne. Les traverses **5** peuvent ainsi coulisser relativement par rapport à la chaîne **11.**

Selon cette variante, les moyens **30** comportent des moyens de liaison temporaire entre la chaîne et la bâche, selon au moins le sens de débâchage **f**_{**2**}**,** pour permettre à la chaîne d'entraîner la bâche jusqu'au magasin. Ces moyens sont constitués par un doigt **63** adapté pour s'insérer entre les rouleaux **20** de la chaîne et possédant une capacité de déformation élastique autorisant son escamotage par rapport au rouleau de la chaîne, lorsque l'effort qu'il subit dans le sens de débâchage **f**_{**2**}**,** dépasse un seuil prédéterminé. Dans l'exemple illustré, chaque doigt **63** est monté pivotant sur la tige de butée **62** dans un plan sensiblement perpendiculaire à l'axe des rouleaux **20.** Tel que cela ressort plus précisément de la **Fig. 8,** l'extrémité de la bâche non reliée à la poutre de tête **5** est fixée, de préférence par l'intermédiaire d'un ressort de rappel **64,** à une butée **65** montée pour s'interposer sur le trajet des traverses. La butée **65** est destinée à agir sur Les moyens de liaison **30,** afin d'assurer la désolidarisation selon le sens de bâchage de la bâche par rapport à la chaîne.

Le fonctionnement du dispositif illustré aux **Fig. 8, 9** découle directement de la description qui précède. Lors du déplacement de la chaîne **11** dans le sens de bâchage **f**_{**1**}**,** la poutre de tête **4** est déplacée dans le même sens entraînant le déplacement de la traverse **5** adjacente dans le même sens, par l'intermédiaire de la bâche. Il est à noter que selon le sens de bâchage **f**_{**1**}**,** le doigt élastique **63** est conçu pour pivoter librement pour permettre le coulissement relatif de la chaîne par rapport aux chariots **31** supportant les doigts **63.** Les traverses **5** sont ainsi déplacées successivement pour être réparties régulièrement le long de la chaîne avec un écartement donné dépendant de la distance de montage des traverses sur la bâche en position tendue de cette dernière.

Lors de l'opération de débâchage, la chaîne **11** est commandée dans le sens **f**_{**2**}**,** de sorte que les traverses **5** se trouvent solidarisées avec la chaîne dans te sens **f**_{**2**} par l'intermédiaire des maillons **20** agissant sur les doigts **63** qui sont sollicités, comme illustré à la **Fig. 8,** dans le sens horaire. Les doigts **63** sont limités dans leur mouvement de pivotement par la semelle d'appui **33** des chariots **31.** Les doigts **63** présentent une résistance suffisante pour être entraînés par les maillons **20** dans le sens **f**_{**2**}**.** Lorsque la traverse la plus proche du magasin **7** se rapproche de la butée **65,** la partie de la bâche, placée entre cette traverse et la butée **65,** a tendance à se replier. Le doigt **63** est conçu pour s'escamoter par rapport au maillon **20,** lorsqu'il subit un effort prédéterminé correspondant à un pliage convenable de la bâche. Dès que cet effort est atteint, La chaîne **11** peut coulisser par rapport aux chariots **31** correspondants et peut être rangée indépendamment de la bâche. Les traverses **5** sont ainsi rangées successivement à l'intérieur du magasin **7** qui peut être constitué par un caisson monté à l'extrémité de la surface à recouvrir.

Il est à noter que, dans l'exemple illustré, la poutre de tête **4** est pourvue d'un chariot **66** muni de galets d'appui et de guidage **67** permettant d'éviter la mise en oeuvre de glissières de guidage pour les chaînes **11.** Dans le même sens, il peut être prévu que les chaînes **11** se trouvent montées de manière à ne pas être en appui sur la surface de roulement du chariot **66.** Selon cette application, la chaîne **11** s'établit selon un profit en arc de cercle, entre le magasin **7** et la poutre de tête, tandis que la bâche forme la corde de l'arc ainsi formé.

Par ailleurs, les parties complémentaires ménagées sur la chaîne et les traverses peuvent présenter diverses formes de réalisation. Ainsi, il peut être envisagé de réaliser des maillons pourvus de lumières ou de bords tombés s'étendant vers l'extérieur de la chaîne, tandis que les traverses sont équipées de têtons mobiles destinés à coopérer avec les bords tombés ou les lumières.

Afin de permettre le rangement de la chaîne **11** dans le magasin **7,** il peut être envisagé de monter le pignon d'entraînement **19** selon un axe perpendculaire au plan de déplacement de la bâche. Selon cette variante, les axes des maillons **20** s'étendent selon une direction perpendiculaire à la direction **f**_{**1**}**, f**_{**2**} de déplacement de la chaîne.

### POSSIBILITE D'APPLICATION INDUSTRIELLE

L'invention trouve une application par le bâchage et le débâchage de tout espace bi ou tridimensionnel, constituant notamment la surface d'une piscine ou le volume de chargement d'un véhicule.

## Revendications

1. Dispositif pour bâcher et débâcher un espace (**2**) bi ou tridimensionnel, comportant une bâche (**1**) montée au moins sur une poutre de tête (**4**), et des moyens pour déplacer la bâche selon un sens de bâchage (**f**_{**1**}) et un sens contraire de débâchage (**f**_{**2**}), entre un magasin (**7**) de réception de la bâche en position débâchée et une position de bâchage de l'espace, caractérisé en ce que les moyens de déplacement sont constitués par au moins un équipement (**A, B**) comportant :
- une chaîne (**11**) rigide au moins en poussée, commandée en translation et comportant une extrémité reliée à la poutre de tête (**4**)**,**
- une série de moyens (**30**) assurant une liaison temporaire relativement entre la chaîne et la bâche et destinés à être répartis le long de la bâche en position de bâchage,
- et un système (**42, 65**) agissant sur les moyens (**30**) et adapté pour désolidariser, au niveau du magasin et au moins selon le sens de débâchage, la bâche par rapport à la chaîne, permettant un rangement successif de la bâche dans le magasin, indépendamment du rangement de la chaîne et un escamotage complet de l'équipement par rapport à l'espace (**2**) à recouvrir.

2. Dispositif selon la revendication 1, caractérisé en ce que les moyens de liaison (**30**) comportent des moyens (**32, 51-53, 61-62**) assurant une liaison relative de la bâche (**1**) par rapport à la chaîne (**11**) selon au moins une direction normale à celle de déplacement de la chaîne et des moyens (**38, 51-53, 63**) assurant une liaison temporaire selon au moins le sens de débâchage (**f**_{**2**}) pour permettre à la chaîne d'entrainer la bâche jusqu'au magasin.

3. Dispositif selon la revendication 2, caractérisé en ce que les moyens de liaison temporaire (**38, 53, 63**) et les moyens de liaison (**32, 53, 61-62**) normale à la chaîne sont aménagés, au moins en partie, sur des chariots ou supports (**31**) montés solidaires de la bâche.

4. Dispositif selon la revendication 3, caractérisé en ce que les chariots (**31**) sont portés chacun par une traverse (**5**) montée solidaire de la bâche (**1**)**.**

5. Dispositif selon la revendication 3, caractérisé en ce que les moyens (**32**) de liaison normale à la chaîne sont constitués par des moyens d'accrochage formés par un crochet (**36**) porté par le chariot et destiné à s'engager partiellement autour d'un rouleau(**20**) de la chaîne, de part et d'autre du crochet étant disposées une butée (**39**) et une contre-butée (**41**) aptes à venir en appui sur les rouleaux (**20**) de la chaîne.

6. Dispositif selon la revendication 2 ou 3, caractérisé en ce que les moyens de liaison temporaire sont constitués par au moins un doigt (**38, 63**) adapté pour s'insérer entre les rouleaux (**20**) de la chaîne.

7. Dispositif selon la revendication 6, caractérisé en ce que le doigt (**63**) possède une capacité de déformation élastique autorisant son escamotage par rapport au rouleau (**20**) de la chaîne, lorsque l'effort pu'il subit dépasse un seuil prédéterminé.

8. Dispositif selon la revendication 2 ou 3, caractérisé en ce que les moyens de liaison normale au déplacement de la chaîne sont constitués par des parties complémentaires (**51-53, 61-62**) ménagées à la fois sur la chaîne et sur la bâche.

9. Dispositif selon la revendication 1, caractérisé en ce que la chaîne (**11**) est commandée en translation par un pignon (**19**) placé au niveau du magasin (**7**) et en relation de distance duquel est disposée une glissière de guidage (**47**) pour les moyens de liaison temporaire (**30**), de manière à assurer leur guidage lors des opérations de solidarisation et de désolidarisation avec la chaîne.

10. Dispositif selon la revendication 1, caractérisé en ce que le système (**42**) de désolidarisation de la bâche par rapport à la chaîne (**11**) assure aussi l'amenée des moyens de liaison temporaire (**30**), jusqu'à l'entrée du magasin (**7**).

11. Dispositif selon la revendication 10, caractérisé en ce que le système (**42**) de désolidarisation de la bâche par rapport à la chaîne est constituée par un rail s'étendant à l'intérieur du magasin, à proximité du pignon et dans l'axe de déplacement de la chaîne pour venir s'interposer entre les chariots (**31**) et la chaîne (**11**).

12. Dispositif selon les revendications 1 et 7, caractérisé en ce que le système de désolidarisation de la bâche par rapport à la chaîne (**11**) est constitué par une butée (**65**) s'interposant sur le trajet de déplacement de la bâche, selon le sens de débâchage (**f**_{**2**}), pour assurer en combinaison avec la chaîne, l'application d'un effort sur le doigt élastique (**63**) à une valeur prédéterminée permettant l'escamotage du doigt.

13. Dispositif selon la revendication 1, caractérisé en ce qu'il comporte deux équipements (**A, B**) dont les chaînes (**11**) s'étendent parallèlement à distance l'une de l'autre, afin de supporter la bâche (**1**).

## Claims

1. A device for covering and uncovering a two- or three-dimensional space (2), the device comprising a cover (1) mounted on at least one head beam (4), and means for moving the cover in a covering direction (f₁) and in a contrary, uncovering direction (f₂) between a magazine (7) for receiving the cover in the uncovered position and a position in which the space is covered, the device being characterized in that the displacement means are constituted by at least one piece of equipment (A, B) comprising:
• a chain (11) that is rigid, at least in thrust, controlled to move in translation and including one end connected to the head beam (4);
• a series of means (30) for providing temporary coupling between the chain and the cover, and designed to be distributed along the cover in the covering position; and
• a system (42, 65) acting on the temporary coupling means (30) and suitable for disconnecting the cover from the chain in the magazine, and at least in the uncovering direction, said means enabling the cover to be stored sequentially in the magazine independently of the chain being stored, and enabling the equipment to be retracted completely from the space (2) that is to be covered.

2. A device according to claim 1, characterized in that the coupling means (30) comprise means (32, 51-53, 61-62) providing relative coupling between the cover (1) and the chain (11) in at least one direction normal to the displacement direction of the chain, and means (38, 51-53, 63) providing temporary coupling at least in the uncovering direction (f₂) to enable the chain to entrain the cover to the magazine.

3. A device according to claim 2, characterized in that the temporary coupling means (38, 53, 63) and the coupling means (32, 53, 61-62) normal to the chain are provided, at least in part, on carriages or supports (31) secured to the cover.

4. A device according to claim 3, characterized in that each carriage (31) is carried by a cross-member (5) secured to the cover (1).

5. A device according to claim 3, characterized in that the coupling means (32) normal to the chain are constituted by fastening means formed by a hook (36) carried by the carriage and designed to engage partially around a roller (20) of the chain, with a stop (39) and a counter-stop (41) being disposed on either side of the hook and being suitable for coming into abutment against the rollers (20) of the chain.

6. A device according to claim 2 or 3, characterized in that the temporary coupling means are constituted by at least one finger (38, 63) adapted to insert itself between the rollers (20) of the chain.

7. A device according to aim 6, characterized in that the finger (63) possesses capacity for elastic deformation enabling it to retract from the roller (20) of the chain when the force to which it is subjected exceeds a predetermined threshold.

8. A device according to claim 2 or 3, characterized in that the coupling means normal to the displacement of the chain are constituted by complementary portions (51-53, 61-62) formed on the chain and on the cover.

9. A device according to claim 1, characterized in that the chain (11) is moved in translation by a sprocket (19) placed at the magazine (7) and a guide slideway (47) for the temporary coupling means (30) is disposed in a distance relationship relative to the sprocket to enable the temporary coupling means to be guided during operations of being connected to and disconnected from the chain.

10. A device according to claim 1, characterized in that the system (42) for disconcerting the cover from the chain (11) also ensures that the temporary coupling means (30) are taken to the entrance of the magazine (7).

11. A device according to claim 10, characterized in that the system (42) for disconnecting the cover from the chain is constituted by a rail extending inside the magazine in the vicinity of the sprocket and on the displacement axis of the chain to be interposed between the carriages (31) and the chain (11).

12. A device according to claims 1 and 7, characterized in that the system for disconnecting the cover from the chain (11) is constituted by a stop (65) that is interposed on the displacement path of the cover in the uncovering direction (f₂), to co-operate with the chain to apply a force on the elastic finger (63) of predetermined value enabling the finger to be retracted.

13. A device according to claim 1, characterized in that it includes two pieces of equipment (A, B) whose chains (11) extend in parallel and spaced-apart from each other, so as to support the cover (1).

## Patentansprüche

1. Vorrichtung zum Über- und Abplanen eines zwei- oder dreidimensionalen Raumes (2), mit einer Plane (1), die mindestens auf einem Kopfträger (4) angebracht ist, und mit Mitteln zum Versetzen der Plane in Aufplanrichtung (f₁) und in einer entgegengesetzten Abplanrichtung (f₂) zwischen einem Magazin (7) zur Aufnahme der Plane in abgeplanter Lage und einer Lage zum Überplanen des Raumes,
**dadurch gekennzeichnet, daß**
die Abplanmittel durch mindestens eine Einrichtung (A, B) gebildet sind, die die folgenden Merkmale aufweist:
- eine mindestens unter Schubwirkung starre Kette (11), die zur Translationsbewegung angesteuert ist und ein Ende aufweist, das mit dem Kopfträger (4) verbunden ist,
- eine Reihe von Mitteln (30), die eine zeitweise Relativverbindung zwischen der Kette und der Plane sicherstellen und dazu bestimmt sind, längs der Plane in der Aufplanlage verteilt zu sein, und
- ein System (42, 65), das auf die Mittel (30) einwirkt und dazu eingerichtet ist, auf Höhe des Magazins und mindestens in Abplanrichtung die feste Verbindung der Plane mit der Kette zu lösen, was eine sukzessive Verwahrung der Plane im Magazin unabhängig von der Verwahrung der Kette und ein vollständiges Einfahren der Einrichtung bezüglich des abzudeckenden Raumes (2) gestattet.

2. Vorrichtung nach Anspruch 1, dadurch gekennzeichnet, daß die Verbindungsmittel (30) Mittel (32, 51-53, 61-62), die eine Relativverbindung der Plane (1) mit der Kette (11) längs mindestens einer Richtung senkrecht zu der der Verlagerung der Kette sicherstellen, sowie Mittel (38, 51-53, 63) aufweisen, die eine zeitweise Verbindung längs mindestens der Abplanrichtung (f₂) sicherstellen, um es der Kette zu gestatten, die Plane bis zum Magazin zu befördern.

3. Vorrichtung nach Anspruch 2, dadurch gekennzeichnet, daß die Mittel zur zeitweisen Verbindung (38, 53, 63) und die Mittel (32, 53, 61-62) zur Verbindung senkrecht zur Kette mindestens teilweise auf Läufern oder Trägern (31) angeordnet sind, die fest an der Plane angebracht sind.

4. Vorrichtung nach Anspruch 3, dadurch gekennzeichnet, daß die Läufer (31) jeweils von einer Traverse (5) getragen sind, die fest an der Plane (1) angebracht ist.

5. Vorrichtung nach Anspruch 3, dadurch gekennzeichnet, daß die Mittel (32) zur Verbindung senkrecht zur Kette von Verhakungsmitteln gebildet sind, die von einem Haken (36) gebildet sind, der vom Läufer getragen ist und dazu bestimmt ist, teilweise rund um eine Rolle (20) der Kette herumzugreifen, wobei beiderseits des Hakens ein Anschlag (39) und ein Gegenanschlag (41) angeordnet sind, die dazu eingerichtet sind, auf den Rollen (20) der Kette zur Anlage zu gelangen.

6. Vorrichtung nach Anspruch 2 oder 3, dadurch gekennzeichnet, daß die Mittel zur zeitweisen Verbindung von mindestens einem Finger (38, 63) gebildet sind, der dazu eingerichtet ist, zwischen den Rollen (20) der Kette einzudringen.

7. Vorrichtung nach Anspruch 6, dadurch gekennzeichnet, daß der Finger (63) die Möglichkeit zur elastischen Verformung besitzt, die sein Zurückfahren von der Rolle (20) der Kette ermöglicht, wenn die Kraft, der er unterzogen wird, einen bestimmten Schwellenwert überschreitet.

8. Vorrichtung nach Anspruch 2 oder 3, dadurch gekennzeichnet, daß die Mittel zur Verbindung senkrecht zur Verlagerung der Kette von komplementären Abschnitten (51-53, 61-62) gebildet sind, die gleichzeitig in die Kette und in die Plane eingebracht sind.

9. Vorrichtung nach Anspruch 1, dadurch gekennzeichnet, daß die Kette (11) zur Translationsbewegung durch ein Kettenritzel (19) angesteuert ist, das auf Höhe des Magazins (7) angeordnet ist, und daß, zu diesem beabstandet, eine Gleitführung (47) für die Mittel zur zeitweisen Verbindung (30) derart angeordnet ist, daR ihre Führung längs der Vorgange des Herstellens und Lösens der festen Verbindung mit der Kette sichergestellt ist.

10. Vorrichtung nach Anspruch 1, dadurch gekennzeichnet, daß das System (42) zum Lösen der festen Verbindung zwischen der Plane und der Kette (11) auch die Zuführung der Mittel zur zeitweisen verbindung (30) bis zum Einlauf in das Magazin (7) sicherstellt.

11. Vorrichtung nach Anspruch 10, dadurch gekennzeichnet, daß das System (42) zum Lösen der festen Verbindung zwischen der Plane und der Kette von einer Schiene gebildet ist, die sich im Inneren des Magazins in der Nähe des Kettenritzels und in der Bewegungsachse der Kette erstreckt, um zwischen den Läufern (31) und der Kette (11) einzugreifen.

12. Vorrichtung nach Anspruch 1 und 7, dadurch gekennzeichnet, daß das System zum Lösen der festen Verbindung zwischen der plane und der Kette (11) von einem Anschlag (65) gebildet ist, der auf der Bewegungsbahn der Plane in Abplanrichtung (f₂) eingreift, um in Kombination mit der Kette die Aufbringung einer Kraft mit einem vorbestimmten Wert, der das Einfahren des Fingers auf den elastischen Finger (63) sicherzustellen.

13. Vorrichtung nach Anspruch 1, dadurch gekennzeichnet, daß sie zwei Einrichtungen (A, B) aufweist, deren Ketten (11) sich mit Abstand voneinander parallel erstrecken, um die Plane (1) zu tragen.
